# EUROPÄISCHE PATENTSCHRIFT

(11) **EP 1 581 046 B1**
(45) Veröffentlichungstag und Bekanntmachung des Hinweises auf die Patenterteilung: **15.08.2007**
(21) Anmeldenummer: 03785768.7
(22) Anmeldetag: 08.12.2003
(51) Int. Cl.: A01K 27/00

(54) **VORRICHTUNG ZUR KENNTLICHMACHUNG VON HUNDEN, INSBESONDERE VON JAGDHUNDEN**
DEVICE FOR IDENTIFYING DOGS, IN PARTICULAR HUNTING DOGS
DISPOSITIF POUR SIGNALER UN CHIEN, NOTAMMENT UN CHIEN DE CHASSE

(30) Priorität: 07.12.2002 DE 20218998 U
(43) Veröffentlichungstag der Anmeldung: 05.10.2005
(73) Patentinhaber: Lammers, Manfred, 48703 Stadtlohn (DE)
(72) Erfinder: Lammers, Manfred, 48703 Stadtlohn (DE)
(74) Vertreter: Hoffmeister, Helmut
(86) Internationale Anmeldenummer: PCT/EP2003/013876
(87) Internationale Veröffentlichungsnummer: WO 2004/052095

(56) Entgegenhaltungen:
- GB-A- 532 235
- US-A- 2 652 649
- US-A- 5 199 383
- US-A- 5 746 158

## Beschreibung

Die Erfindung betrifft eine Vorrichtung zur Kenntlichmachung von Hunden, insbesondere von Jagdhunden, umfassend folgende Teile:
- einen Hundesattel, der über ein Brustgeschirr am Körper des Hundes zu befestigen ist,
- einen flexiblen, aufrecht stehenden Stab, der mit einem seinem Ende am Hundesattel befestigt ist,
- ein visuell erkennbares Kennzeichen, das am zweiten, freien Ende des Stabes angeordnet ist.

Eine gattungsgemäße Vorrichtung ist der US 2,652,649 zu entnehmen. Nachteilig bei der bekannten Vorrichtung ist, dass der Stab nur auf eine vorbestimmte Länge ausgelegt ist. Bei einem hochgewachsenen Unterholz kann der Stab zu kurz sein und muß gegen einen längeren ausgetauscht werden. In einem offenen Gelände ist die aufrecht stehende Stellung des Stabes oft unnötig. Ein weiterer Nachteil ist, dass die Befestigung des Stabes am Hundesattel lediglich das momentane, bewegungs- oder hindernisbedingte Verschwenken des Stabes erlaubt.

Aufgabe der Erfindung ist, eine universelle Vorrichtung der eingangs genannten Art zu konzipieren, die sich am Körper des Hundes ablegen läßt und sowohl für den Hund als auch für den Jäger bequemer ist.

Diese Aufgabe ist durch eine gattungsgemäße Vorrichtung zur Kenntlichmachung von Hunden, insbesondere von Jagdhunden, gelöst, bei der
- der Stab längenveränderlich ist, und/oder
- und dass sich der Stab entlang des Körpers des Hundes über einen Verstellmechanismus manuell dauerhaft anlegen läßt.

Vorzugsweise ist der Stab in Form von mehreren ineinander schiebbaren Hülsen ausgeführt, die eine teleskopartige, auf eine gewünschte Länge ausziehbare Anordnung ergeben. Nach dem Zusammenschieben der Hülsen bleibt der Stab kurz und kompakt.

Die Hülsenabschnitte können verschiedene Dicken aufweisen, beispielsweise die zu einem freien Ende des Stabes zulaufenden Hülsen können eine geringere Dicke haben. Ebenso können die Hülsenabschnitte unterschiedlich lang sein.

Ein wesentliches Merkmal der Erfindung ist, dass der Stab an dem am Hundesattel angebrachten Verstellmechanismus derart verschwenkbar angeordnet ist, dass der Stab wenigstens zwei Stellungen, nämlich eine aufrechte Stellung oder eine am Körper des Hundes angelegte Stellung annehmen kann.

Der Verstellmechanismus kann einen mit dem Hundesattel verbundenen Fuß aufweisen, an dem der Stab über eine sich an seinem Ende befindende Schraubenfeder und ein festlegbares Drehgelenk angebracht ist.

Die Lageverstellung und Festlegung des Stabes kann über ein Drehgelenk, einen Exzenter, über Feder- und/oder Inrastelemente oder beliebige Verschlüsse, wie Schnappverschluß oder dgl., erfolgen.

Vorteilhaft ist, dass das Kennzeichen, wie Fahne oder Püschel, in eine am freien Ende des Stabes angeordnete Hülse platziert und nach Bedarf herausgezogen werden kann.

Es ist nicht ausgeschlossen, am freien Ende des Stabes eine batteriebetriebene Leuchtdiode anzubringen, die beispielsweise derart angeordnet ist, dass für den Jäger sichtbar, jedoch für den Hund unsichtbar ist. Dies kann durch ein entsprechend geformtes Schirmelement verwirklicht werden.

Weiterhin ist möglich, am freien Ende des Stabes einen Funksender anzubringen, mit dem der Hund zu orten ist.

Insgesamt trägt die Vorrichtung gemäß der vorliegenden Erfindung einer wesentlich höheren Sicherheit für Jagdhunde bei.

Ein Ausführungsbeispiel der Erfindung ist anhand der Zeichnung näher erläutert. Die Figuren Zeigen:
- Fig. 1: eine Vorrichtung mit einem teleskopierbaren Stab und einem ersten Verstellmechanismus, in einer schematischen Seitenansicht;
- Fig. 2: einen Verstellmechanismus in einer anderen Ausführung, in einer schematischen Seitenansicht;
- Fig. 3: die am Rücken eines Hundes befestigte Vorrichtung gemäß der Fig. 1 in einer aufrechten Stellung des Stabes;
- Fig. 4: die am Rücken eines Hundes befestigte Vorrichtung gemäß der Fig. 1 in einer am Körper des Hundes angelegten Stellung des Stabes;
- Fig. 5: den teleskopierbaren Stab in einer schematischen Darstellung; und

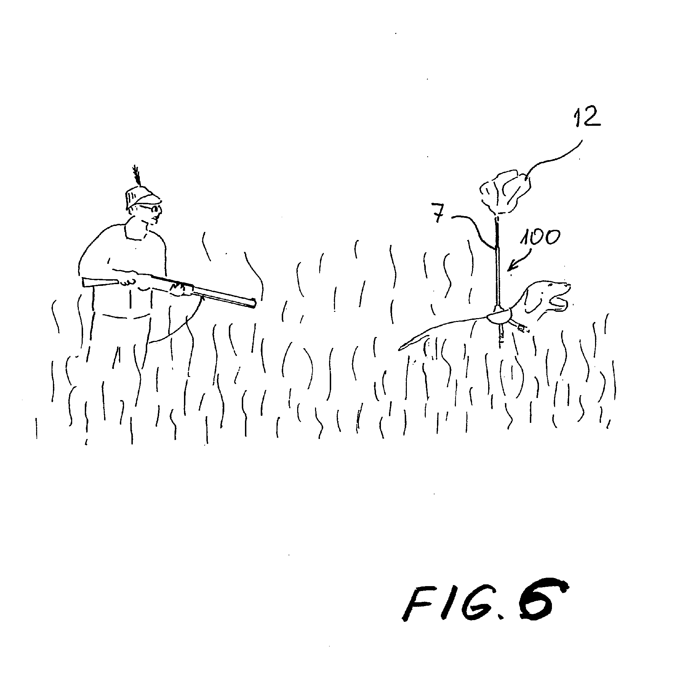

- Fig. 6: eine Jagdszene mit einem die Vorrichtung gemäß der Erfindung tragenden Hund.

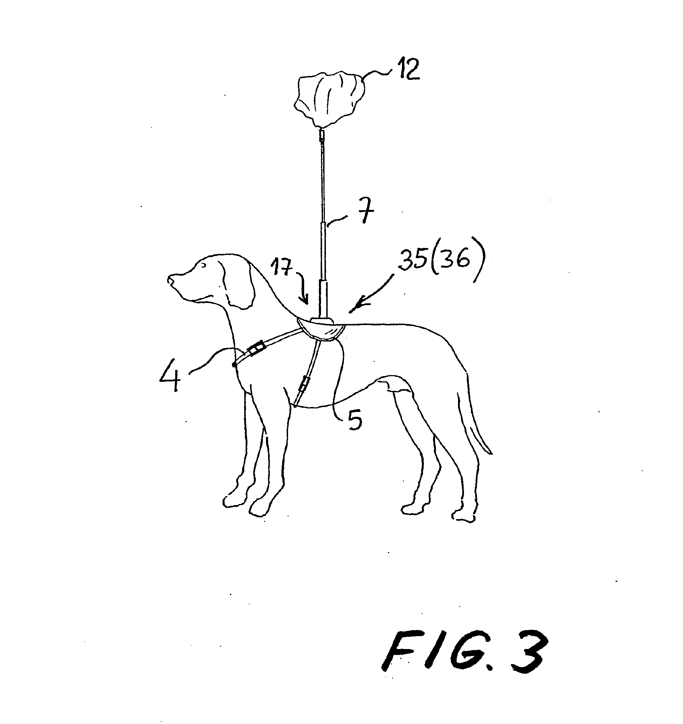

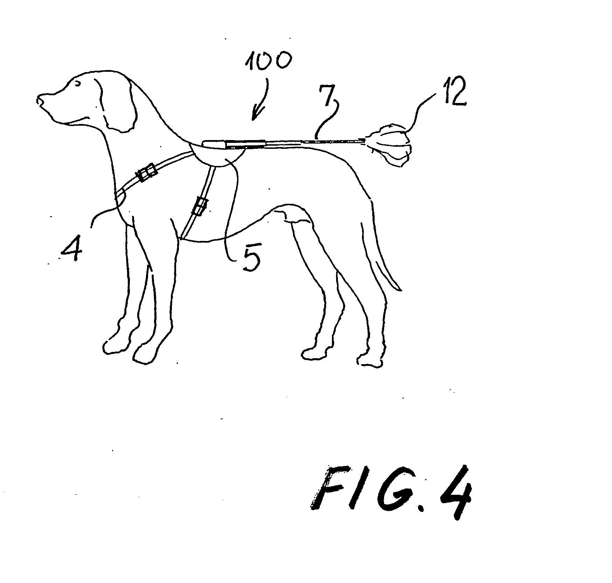

In den Figuren 3 und 4 zeigen eine am Rücken eines Jagdhundes abnehmbar befestigte Vorrichtung 100 zur Kenntlichmachung von Hunden, die sich im wesentlichen aus einem Geschirr 4 mit Hundesattel 5, einem Verstellmechanismus 35 bzw. 36 und einem teleskopierbaren Stab 7 zusammensetzt.

Ein freies Ende 27 des Stabes 7 trägt ein Kennzeichen 12 in Form eines aus einer Hülse 21 herausziehbaren Püschels. Der herausgezogene Püschel ist gut sichtbar, selbst in hohem Bodenaufwuchs. Ein zweites, dem freien Ende 27 gegenüberliegendes Ende 17 des Stabes 7 ist drehbar am Verstellmechanismus 35 gelagert. Zu diesem Zweck ist das Ende 17 des Stabes über ein Drehgelenk 29 mit einem Fuß 24 verbunden, der wiederum am Hundesattel 5 angebracht ist. Der Fuß 24 kann mit dem Hundesattel 5 vernietet, verklebt und/oder verschraubt sein.

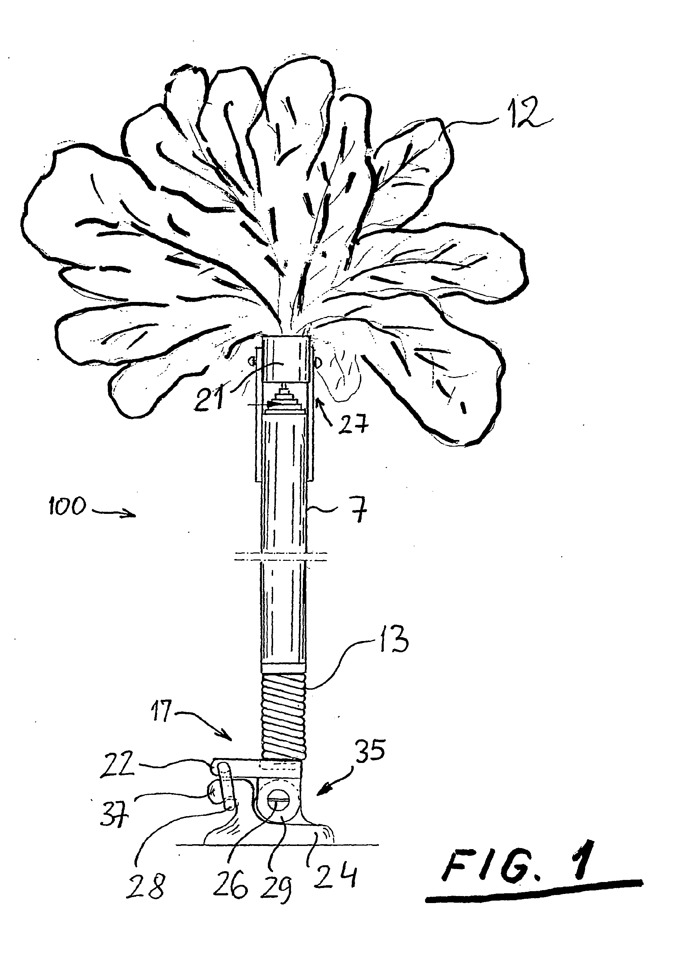

Die Stellungen S1, S2 des Stabes 7 werden durch Lösen und Anziehen einer Schraube 26 festgelegt, welche in das Drehgelenk 29 eingebaut ist. Die Stellung S1 entspricht dem aufrecht stehenden (z. B. Figuren 1 und 3) und die Stellung S2 dem entlang des Körpers des Hundes angelegten Stab (vgl. Fig. 4).

Der Verstellmechanismus 35 besteht aus dem genannten Fuß 35, dem Drehgelenk 29, einem Joch 22, das eine biegsame, sich am Ende 17 des Stabes befindende Schraubenfeder 13 umgibt, und aus einem mit dem Joch 22 verschwenkbar verbundenen Bügel 28, welcher in der aufrechten Stellung S1 an einem Daumen 37 des Fußes angespannt ist.

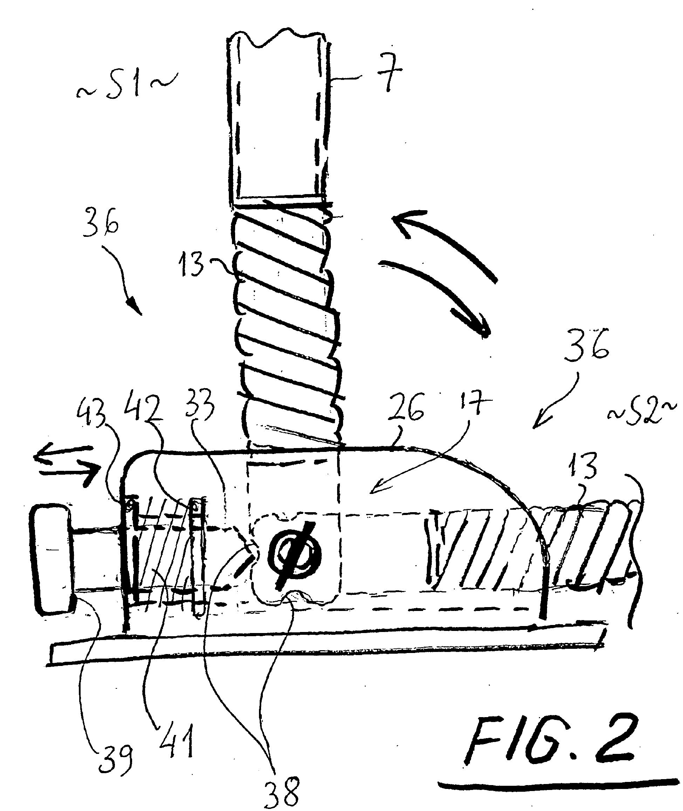

Die Fig. 2 zeigt einen anderen Verstellmechanismus 36, der ebenfalls einen Fuß 26 aufweist, der über nicht dargestellte Befestigungsmittel mit dem Hundesattel 5 verbunden ist. Der Stab 7 ist an seinem unteren Ende 17 mit zwei Einkerbungen 38 versehen, in die ein Rastelement 33, im vorliegenden Fall eine Spitze eines Bolzens 39 mit Kopf eingreift. Durch die Platzierung einer Spannfeder 41 in einem Raum zwischen einem Anschlagelement 42 des Bolzens 39 und einem zweiten Anschlagelement 43, der mit dem Fuß 26 fest verbunden ist, übt die Spitze des Bolzens eine Kraft auf die Einkerbung 38 aus. Auf diese einfache Weise wird die Lage des Stabes festgelegt. Durch das Ziehen mit dem Kopf des Bolzens 39 und Drehen mit dem Stab um etwa 90° (vgl. Fig. 2) wird eine zweite Stellung S2 festgelegt, indem der Bolzen in die zweite Einkerbung eingreift.

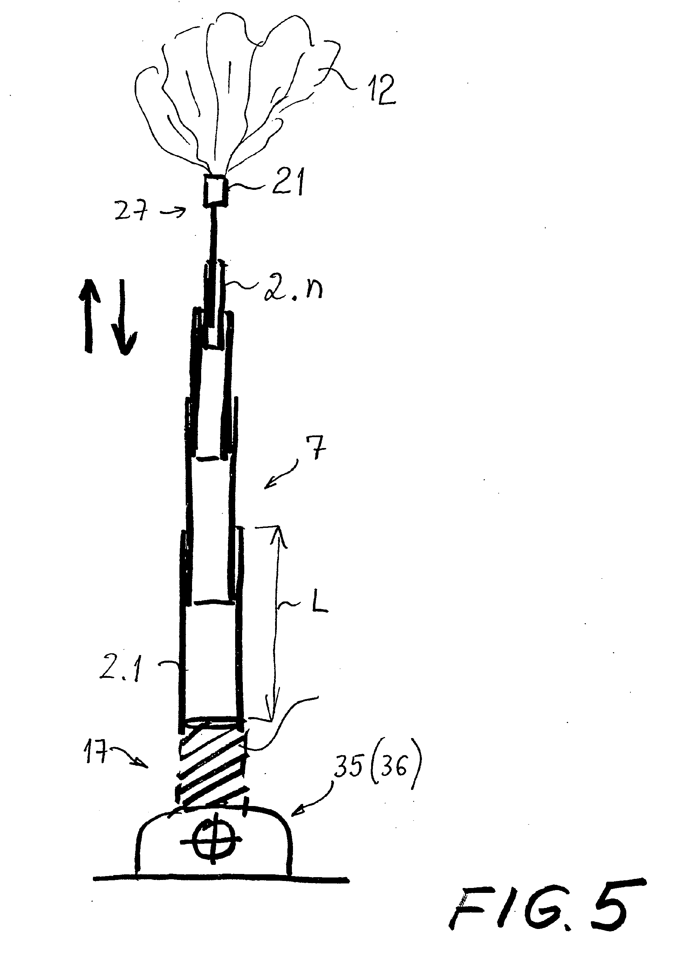

Wie die Figuren 1 und 5 zeigen, besteht der Stab 7 aus mehreren ineinander schiebbaren Hülsenabschnitten 2.1...2.n, von denen der unterste, mit einer biegsamen Schraubenfeder 13 verbundene Hülsenabschnitt eine Länge L aufweist, die die Längen der übrigen Hülsenabschnitte überschreitet. Die Materialdicken (Wandungdicken) der einzelnen Hülsenabschnitte 2.1.....2.n sind auch unterschiedlich. Vorzugsweise weist der Mantel des untersten Hülsenabschnitts 2.1 eine größte Dicke auf, wobei sich die Materialdicken der ineinander schiebbaren, weiteren Hülsenabschnitte entsprechend verkleinern. Selbstverständlich ist möglich, die Hülsenabschnitte von gleicher Materialdicke einzusetzen.

### Bezugszeichenliste:

- 2.1...2.n: Hülsenabschnitt
- 4: Geschirr
- 5: Hundesattel
- 7: Stab
- 12: Kennzeichen
- 13: Schraubenfeder

- 17: Ende
- 22: Joch
- 24: Fuß

- 26: Fuß
- 27: Ende
- 28: Bügel
- 29: Drehgelenk

- 33: Einrastelement
- 35: Verstellmechanismus
- 36: Verstellmechanismus
- 37: Daumen
- 38: Einkerbung
- 39: Bolzen

- 41: Spannfeder
- 42: Anschlagelement
- 43: Anschlagelement

- L: Länge
- S1, S2: Stellung
- 100: Vorrichtung

## Patentansprüche

1. Vorrichtung (100) zur Kenntlichmachung von Hunden, insbesondere von Jagdhunden, umfassend folgende Teile:
- einen Hundesattel (5), der über ein Brustgeschirr (4) am Körper des Hundes zu befestigen ist,
- einen flexiblen, aufrecht stehenden Stab (7), der mit einem seinem Ende (17) am Hundesattel (5) befestigt ist,
- ein visuell erkennbares Kennzeichen (12), das am zweiten, freien Ende (27) des Stabes (7) angeordnet ist,
**dadurch gekennzeichnet, dass**
sich der Stab (7) entlang des Körpers des Hundes über einen Verstellmechanismus manuell dauerhaft anlegen läßt.

2. Vorrichtung nach Anspruch 1, **dadurch gekennzeichnet, dass** der Stab (7) längenveränderlich ist.

3. Vorrichtung nach Anspruch 2, **dadurch gekennzeichnet, dass** der Stab (7) teleskopierbar ist.

4. Vorrichtung nach Anspruch 3, **dadurch gekennzeichnet, dass** der teleskopartige Stab (7) ineinanderschiebbare Hülsenabschnitte (2.1 ..... 2.n) von verschiedenen Dicken aufweist.

5. Vorrichtung nach Anspruch 4, **dadurch gekennzeichnet, dass** die Hülsenabschnitte (2.1.....2.n) unterschiedliche Längen (L) aufweisen.

6. Vorrichtung nach einem der Ansprüche 1 bis 5, **dadurch gekennzeichnet, dass** der Stab (7) an dem am Hundesattel (5) angebrachten Verstellmechanismus (35; 36) derart verschwenkbar angeordnet ist, dass der Stab (7) wenigstens zwei Stellungen, nämlich eine aufrechte Stellung (S1) oder eine am Körper des Hundes angelegte Stellung (S2) annehmen kann.

7. Vorrichtung nach Anspruch 6, **dadurch gekennzeichnet, dass** der Verstellmechanismus (35) einen mit dem Hundesattel (5) verbundenen Fuß (24; 26) aufweist, an dem der Stab (7) über eine sich an seinem Ende (17) befindende Schraubenfeder (13) und ein festlegbares Drehgelenk (29) angebracht ist.

8. Vorrichtung nach Anspruch 7, **dadurch gekennzeichnet, dass**
- der Fuß (24) einen Daumen (37) aufweist,
- und dass am Ende (17) des Stabes, außerhalb des Drehgelenkes (29) ein Joch (22) angeordnet ist, an dem ein Bügel (28) drehbar angebracht ist, welcher mit dem Daumen (27) zusammenwirkt.

9. Vorrichtung nach Anspruch 7, **dadurch gekennzeichnet, dass** der Fuß (26) ein federndes Rastelement (33) aufweist, das in entsprechende Einkerbungen (38) am Ende (17) des Stabes eingreift und damit die gewünschte Stellung (S1; S2) des Stabes ermöglicht.

10. Vorrichtung nach einem der vorhergehenden Ansprüche, **dadurch gekennzeichnet, dass** das freie Ende (27) des Stabes (7) eine Hülse (21) trägt, aus der das Kennzeichen (12), wie Fahne oder Püschel, herausziehbar ist.

11. Vorrichtung nach einem der vorhergehenden Ansprüche, **dadurch gekennzeichnet, dass** am freien Ende (27) des Stabes (7) ein elektrisches, batteriebetriebenes Signalelement, wie Leuchtdiode, angebracht ist.

12. Vorrichtung nach einem der vorhergehenden Ansprüche, **dadurch gekennzeichnet, dass** am freien Ende (27) des Stabes (7) ein Funksender angeordnet ist, der Teil einer Ortungsvorrichtung ist.

13. Vorrichtung nach einem der vorhergehenden Ansprüche, **dadurch gekennzeichnet, dass** der Hundesattel (5) aus Leder und/oder Textilmaterial gefertigt ist.

14. Vorrichtung nach einem der vorhergehenden Ansprüche, **dadurch gekennzeichnet, dass** der Stab (7) aus Metall besteht.

15. Vorrichtung nach einem der vorhergehenden Ansprüche, **dadurch gekennzeichnet, dass** der Stab (7) aus Kunststoff besteht.

## Claims

1. Device (100) for identifying dogs, particularly hunting dogs, comprising the following parts:
- a saddle (5) which is to be secured by means of a chest harness (4) to the body of the dog,
- a flexible upright rod (7) which is secured with one end (17) to the saddle (5),
- a visually recognisable identification (12) which is arranged at the second, free end (27) of the rod (7),
**characterised in that**
the rod (7) can be manually brought to lie permanently along the body of the dog by means of an adjusting mechanism.

2. Device according to claim 1, **characterised in that** the rod (7) can be adjusted in length.

3. Device according to claim 2, **characterised in that** the rod (7) is telescopic.

4. Device according to claim 3, **characterised in that** the telescopic rod (7) comprises sleeve sections (2.1 ... 2.n) of differing thickness which can be inserted one inside the other.

5. Device according to claim 4, **characterised in that** the sleeve sections (2.1 ... 2.n) have different lengths (L).

6. Device according to one of the claims 1 to 5, **characterised in that** the rod (7) is arranged on the adjusting mechanism (35; 36) arranged on the saddle (5) so as to be pivotable in such a way that the rod (7) can assume at least two positions, namely an upright position (S1) or a position (S2) lying along the body of the dog.

7. Device according to claim 6, **characterised in that** the adjusting mechanism (35) comprises a base element (24; 26) connected to the saddle (5), on which the rod (7) is arranged by means of a coil spring (13) located at its end (17) and a fixable pivot joint (29).

8. Device according to claim 7, **characterised in that**
- the base element (24) comprises a projecting element (37)
- and that at the end (17) of the rod, outside of the pivot joint (29), a yoke (22) is arranged, on which a bar element (28) is arranged so as to be rotatable and cooperates with the projecting element (27) .

9. Device according to claim 7, **characterised in that** the base element (26) comprises a resilient engaging element (33) which engages in corresponding indentations (38) at the end (17) of the rod and thus allows the desired position (S1; S2) of the rod.

10. Device according to one of the preceding claims, **characterised in that** the free end (27) of the rod (7) carries a sleeve (21), out of which the identification (12), such as a flag or tuft, can be pulled.

11. Device according to one of the preceding claims, **characterised in that** an electrical, battery-operated signal element such as a light-emitting diode is arranged at the free end (27) of the rod (7).

12. Device according to one of the preceding claims, **characterised in that** a radio emitter is arranged at the free end (27) of the rod (7) which is part of a locating device.

13. Device according to one of the preceding claims, **characterised in that** the saddle (5) is made of leather and / or textile material.

14. Device according to one of the preceding claims, **characterised in that** the rod (7) consists of metal.

15. Device according to one of the preceding claims, **characterised in that** the rod (7) consists of plastic.

## Revendications

1. Dispositif (100) d'identification de chien, en particulier de chien de chasse, comprenant les éléments suivants:
- une selle (5) de chien qui est à fixer sur le corps du chien au moyen d'un harnais (4) de poitrail,
- un barreau flexible dressé verticalement (7), qui est fixé par sa première extrémité (17) à la selle (5) de chien,
- un moyen d'identification visuellement reconnaissable (12), qui est disposée à la deuxième extrémité, libre (27) du barreau (7),
**caractérisé en ce que** le barreau (7) peut être manuellement appliqué de façon durable le long du corps du chien au moyen d'un mécanisme ajustable.

2. Dispositif selon la revendication 1, **caractérisé en ce que** la longueur du barreau (7) est modifiable.

3. Dispositif selon la revendication 2, **caractérisé en ce que** le barreau (7) est télescopique.

4. Dispositif selon la revendication 3, **caractérisé en ce que** le barreau télescopique (7) comprend des segments (2.1 ... 2.n) de fourreau d'épaisseurs différentes, coulissant les uns dans les autres.

5. Dispositif selon la revendication 4, **caractérisé en ce que** les longueurs (L) des segments (2.1 ... 2n) sont différentes.

6. Dispositif selon l'une quelconque des revendications précédentes, **caractérisé en ce que** le barreau (7) est disposé à pivotement sur le mécanisme ajustable (35; 36) monté sur la selle (5) de chien d'une manière telle que le barreau (7) peut prendre au moins deux positions, à savoir une position verticale (S1) ou une position (S2) appliquée sur le corps du chien.

7. Dispositif selon la revendication 6, **caractérisé en ce que** le mécanisme ajustable (35) comporte un pied (24; 26) assemblé avec la selle (5) de chien, sur lequel le barreau (7) est monté au moyen d'un ressort hélicoïdal (13), qui se trouve à sa première extrémité (17), et d'une articulation pivotante blocable (29).

8. Dispositif selon la revendication 7, **caractérisé en ce que**:
- le pied (24) comporte un doigt (37), et **en ce que**
- un étrier (22), sur lequel est monté à rotation un arceau (28) qui coopère avec le doigt (27), est monté à l'extrémité (17) du barreau (7), à l'extérieur de l'articulation pivotante (29).

9. Dispositif selon la revendication 7, **caractérisé en ce que** le pied (26) comprend un élément élastique d'encliquetage (33), qui pénètre dans des encoches correspondantes (38) ménagées à l'extrémité (17) du barreau (7), et qui permet ainsi de régler la position souhaitée (S1; S2) dudit barreau.

10. Dispositif selon l'une quelconque des revendications précédentes, **caractérisé en ce que** l'extrémité libre (27) du barreau (7) porte un fourreau (21), duquel le moyen d'identification (12), par exemple un drapeau ou une houppe, peut être extrait.

11. Dispositif selon l'une quelconque des revendications précédentes, **caractérisé en ce qu'**un élément de signalisation, par exemple un élément électrique de signalisation alimenté par batterie, par exemple une diode électroluminescente, est monté à l'extrémité libre (27) du barreau (7).

12. Dispositif selon l'une quelconque des revendications précédentes, **caractérisé en ce qu'**un émetteur radio, qui fait partie d'un dispositif de localisation, est disposé à l'extrémité libre (27) du barreau (7).

13. Dispositif selon l'une quelconque des revendications précédentes, **caractérisé en ce que** la selle (5) de chien est fabriquée en cuir et/ou en matière textile.

14. Dispositif selon l'une quelconque des revendications précédentes, **caractérisé en ce que** le barreau (7) est en métal.

15. Dispositif selon l'une quelconque des revendications précédentes, **caractérisé en ce que** le barreau (7) est en matière plastique.
